# EUROPÄISCHE PATENTSCHRIFT

(11) **EP 2 569 201 B1**
(45) Veröffentlichungstag und Bekanntmachung des Hinweises auf die Patenterteilung: **15.01.2014**
(21) Anmeldenummer: 11718653.6
(22) Anmeldetag: 01.04.2011
(51) Int. Cl.: B62D 1/19, F16K 15/20, F16K 27/02

(54) **VERFAHREN UND VORRICHTUNG ZUR REGELUNG EINES STEUERBAREN ENERGIEABSORBERS**
METHOD AND DEVICE FOR CLOSED LOOP CONTROL OF ADJUSTABLE ENERGY ABSORBER
PROCÉDÉ ET MÉTHODE POUR UN ASSERVISSEMENT CONTROLLÉ D'UN ABSORBEUR AJUSTABLE D'ÉNERGIE

(30) Priorität: 10.05.2010 DE 102010020088
(43) Veröffentlichungstag der Anmeldung: 20.03.2013
(60) Teilanmeldung: 13000977.2
(73) Patentinhaber: ThyssenKrupp Presta AG, 9492 Eschen (LI)
(72) Erfinder: KIRMSZE, Helmut, FL-9494 Schaan (LI)
(74) Vertreter: Lenzing Gerber Stute
(86) Internationale Anmeldenummer: PCT/EP2011/001647
(87) Internationale Veröffentlichungsnummer: WO 2011/141098

(56) Entgegenhaltungen:
- EP-A1- 2 135 795
- WO-A2-03/082636
- DE-B3-102004 033 240
- US-A1- 2004 145 169

## Beschreibung

Die vorliegende Erfindung betrifft ein Verfahren zur Regelung eines steuerbaren Energieabsorbers in einem Lenksystem für ein Kraftfahrzeug mit folgenden Schritten:
- Bestimmung einer Bewegungsgröße einer Relativbewegung zwischen einer zur fahrzeugfesten Fixierung am Kraftfahrzeug vorgesehenen Konsoleneinheit und mit einer von der Konsoleneinheit gehaltenen Lenkspindellagereinheit zur drehbaren Lagerung einer Lenkspindel, wobei die Lenkspindellagereinheit gegenüber der Konsoleneinheit entlang eines Verschiebeweges in einem begrenzten Intervall verschiebbar ist,
- Ausgabe eines Steuersignals an einen steuerbaren Energieabsorber zur Einstellung einer Widerstandskraft gegen eine Verschiebung der Lenkspindellagereinheit relativ zu der Konsoleneinheit. Ein solches Verfahren ist gemäß dem Oberbegriff des Anspruchs 1 aus US 2004/145169 A1 Vorbekannt

Die DE60110870T2 offenbart ein Verfahren zur Ansteuerung eines steuerbaren Energieabsorbers, bei dem zumindest ein Fahrzustandserfassungs-Sensor, der Informationen erfasst, die in Bezug zu der Größenordnung der Energie eines sekundären Aufpralls stehen, ein Gewichtssensor, ein Fahrzeuggeschwindigkeitssensor, ein Insassenpositionssensor und ein Sicherheitsgurttragesensor und ein Zusammenstosserfassungssensor umfasst, auf deren Basis das Energieabsorptionsvermögen eines steuerbaren Energieabsorbers eingestellt wird. Das offenbarte Verfahren benötigt somit eine Vielzahl von Sensoren und ist in der Ausführung aufwendig. Darüber hinaus ist eine optimale Anpassung an den tatsächlich erfolgenden Crashverlauf nicht möglich.

In der GB2435551B wird ein Verfahren zur Ansteuerung eines steuerbaren Energieabsorbers offenbart, bei dem auf Basis der Größe des Fahrers, des Gewichts des Fahrers, der Fahrzeuggeschwindigkeit und der Lage des Fahrzeugs das Energieabsorptionsvermögen angesteuert wird. Neben der Verwendung einer Vielzahl von Messgrößen, die entsprechend aufwendig ist, ist keine Anleitung gegeben, wie auf Basis dieser Messgrößen eine geeignete Ansteuerung des steuerbaren Energieabsorbers erfolgen soll.

Die EP1632418A2 offenbart ein Verfahren zur Ansteuerung eines steuerbaren Energieabsorbers, bei dem eine Anpassung an die eingestellte Winkelposition der Lenksäule erfolgt. Allerdings erfolgt keine Anpassung des Kraftverlaufs an die tatsächlich im Crashfall vorliegenden Parameter, wie die Größe des Fahrers, das Gewicht des Fahrers und die Fahrzeuggeschwindigkeit unmittelbar vor dem Auftreten des Crashereignisses.

Die Aufgabe der Erfindung besteht darin, ein Verfahren zur Regelung eines steuerbaren Energieabsorbers bereitzustellen, das mit einem geringen messtechnischem Aufwand und geringem rechentechnischen Aufwand möglichst zuverlässig das Energieabsorptionsvermögen eines steuerbaren Energieabsorbers einstellt, um eine Schädigung des Fahrers möglichst klein zu halten.

Gelöst wird die Aufgabe durch ein Verfahren gemäß dem Patentanspruch 1 .

In den Unteransprüchen sind vorteilhafte Weiterbildungen der Erfindung beschrieben.

Insbesondere umfasst das Verfahren für ein Lenksystem mit einem Sensor zur Bestimmung einer Position (s) der Lenkspindellagereinheit (3) entlang des Verschiebeweges folgende Schritte:
- Messung der momentanen Position (si) der Lenkspindellagereinheit (3), kontinuierlich oder in vorgebbaren Zeitpunkten (ti) oder Ermittlung der abgelaufenen Zeit (ti) an vorgebbaren Positionen (si)
- Berechnung der momentanen Geschwindigkeit (vi) der Verschiebung der Lenkspindellagereinheit (3);
- Bestimmung eines Vorgabewertes für den Wert des Steuersignals zur Ausgabe an den Energieabsorber auf Basis der momentanen Position (si) und der momentanen Geschwindigkeit (vi) mit der die momentane Verschiebung erfolgt;
- Ausgabe des Steuersignals an den Energieabsorber.

In einem alternativen Verfahren sind folgende Schritte vorgesehen:
- Messung der momentanen Position (si) der Lenkspindellagereinheit (3), kontinuierlich oder in vorgebbaren Vorgabe-Zeiten (tVi) oder Ermittlung der abgelaufenen Zeit (ti) bis zum Erreichen von vorgebbaren Vorgabe-Positionen (sVi);
- Berechnung eines Momentanwertes für die Soll-Differenz als Differenz zwischen einer momentanen Position (si) abzüglich der Vorgabe-Position (sVi) oder eines Momentanwertes für die Soll-Differenz aus der Vorgabe-Zeit (tVi) abzüglich der abgelaufenen Zeit (ti);
- Bestimmung eines Vorgabewertes für den Wert des Steuersignals zur Ausgabe an den Energieabsorber auf Basis der momentanen Position (si) und der momentanen Geschwindigkeit (vi), mit der die momentane Verschiebung erfolgt;
- Ausgabe des Steuersignals an den Energieabsorber.

Der steuerbare Energieabsorber ist dabei derart gestaltet, dass durch die Ansteuerung des Energieabsorbers mit dem Steuersignal die geschwindigkeitsabhängige Widerstandskraft gegen eine Verschiebung der Lenkspindellagereinheit gegenüber der karosseriefesten Konsoleneinheit veränderbar ist.

Der Grundgedanke der Erfindung besteht darin, dass der Fahrer beim Aufprall auf das Lenkrad im Crashfall eine bestimmte kinetische Energie besitzt. Diese kinetische Energie wird durch die Widerstandskraft, die das Lenkrad, beziehungsweise die mit dem Lenkrad verbundene Lenkspindellagereinheit, der Verschiebung gegenüber der Konsoleneinheit entgegen setzt, abgebaut. Der Abbau der Energie erfolgt dabei über den Verschiebeweg, der durch ein entsprechendes Intervall begrenzt ist. Um die Schädigung des Fahrers minimal zu halten, muss die Widerstandskraft über die gesamte Zeit des Crashs minimal gehalten werden. Dabei ist zu berücksichtigen, dass am Ende des Verschiebungsweges jedoch keine Kraftspitze auftreten darf, die dann zur einer Schädigung des Fahrers führen würde.

Die kinetische Energie, die der Fahrer im Fall des Unfalls beziehungsweise Crashs über die Lenksäule abbauen muss, hängt von verschiedenen Umständen ab, wie beispielsweise: ob der Fahrer angegurtet ist oder nicht; ob ein Gurtstraffer vorhanden ist oder nicht; welche Sitzposition der Fahrer einnimmt; welche Größe der Fahrer hat; welches Gewicht der Fahrer hat; sowie eine Vielzahl von weiteren Parametern. Der Kern der Erfindung zielt nun darauf, dass das Energieabsorptionsverhalten der Lenksäule optimal ist, wenn die vom Fahrer auf die Lenksäule übertragene Energie mit genau der Widerstandskraft absorbiert wird, die dazu führt, dass am Ende des Verschiebeweges (also innerhalb des Intervalls) diese kinetische Energie vollständig abgebaut ist. Als Maß für die übertragene Energie dient die Bewegungsgröße der Relativbewegung zwischen der Lenkspindellagereinheit und der Konsoleneinheit. Hier kann insbesondere zwischen einem Weg-Zeit-Verlauf, der Geschwindigkeit und der Beschleunigung eine Größe ausgewählt werden.

Zur Darstellung einer derartigen optimierten Energieabsorption entsprechend dem Stand der Technik müssen eine Vielzahl von Messungen und Rechenschritten durchgeführt werden, um die vom Fahrer auf das Lenkrad übertragene kinetische Energie zu bestimmen und daraus die optimalen Signale zur Ansteuerung des Energieabsorbers zu bestimmen. Insbesondere sind die Bedingungen, wie die Ansteuerung des Energieabsorbers tatsächlich auf den Energieabbau wirkt, oft unklar und im Crashfall kaum vorhersagbar. Hier ist zu bedenken, dass der Crashfall ja nie eintreten soll. Es ist daher möglich, dass der Crashfall erst nach vielen Jahren eintritt und sich die tribologischen Bedingungen durch Umwelteinflüsse verändert haben können (Korrosion).

Der Kern der Erfindung besteht nun darin, dass nur mit sehr wenigen Messungen eine optimierte Energieabsorption ermöglicht wird, wobei eine Vielzahl der oben aufgeführten Umstände und Messwerte durch eine einfach messbare Ersatzgröße ersetzt wird. Als Ersatzgröße wird der Verschiebeweg der Lenkspindellagereinheit gegenüber der Konsoleneinheit in Abhängigkeit von der Zeit verwendet.

In einer bevorzugten Ausführungsform wird zur Wegmessung ein Wegsensor an einer der beiden zueinander bewegten Komponenten angeordnet, der feste Wegmarkierungen, die an der anderen der zueinander bewegten Komponenten angeordnet sind, abtastet. Besonders zu bevorzugen ist ein Hallsensor als Wegsensor. Der Abstand der Wegmarkierungen kann äquidistant oder auch progressiv sein. Die Wegmarkierungen sind dabei derart anzuordnen, dass im Falle einer durch einen Crash bedingten Verschiebung möglichst schnell ein oder mehrere Positionssignale, am besten drei Signale, mit zugehörigen Zeitpunkten zur Verfügung stehen. Mathematisch kann dann daraus bei bekannter Widerstandskraft die eingebrachte Energie bestimmt werden. In der Praxis ist jedoch die Widerstandskraft nur sehr ungenau, wenn überhaupt, bekannt. Deshalb wird in der Erfindung zunächst vorgeschlagen aus der momentanen Geschwindigkeit der Verschiebung ein korrigiertes Steuersignal zu berechnen. Der aufwändigere und genauere Weg besteht in diesem Fall darin, an den verschiedenen Zeitpunkten oder Positionen der Verstellung ausgehend von der momentanen Geschwindigkeit und der Veränderung der Geschwindigkeit (Beschleunigung) zu ermitteln, ob die Widerstandskraft ausreicht, die Geschwindigkeit bis zum Ende des Intervalls auf Null abzusenken. Falls die für das Ende des Intervalls berechnete Geschwindigkeit größer als Null ist, oder kleiner als ein vorgegebener Wert ist, wird die Widerstandskraft erhöht. Falls die für das Ende des Intervalls berechnete Geschwindigkeit vor dem Ende des Intervalls bereits den Wert Null erreicht, wird die Widerstandskraft abgesenkt, um die Energieabsorption mit einem möglichst niedrigen Kraftniveau zu erreichen.

In einer bevorzugten Ausführungsform wird die Änderung der Geschwindigkeit in Bezug auf die unmittelbar davor berechneten Geschwindigkeiten zur Bestimmung der für das Ende des Intervalls berechneten Geschwindigkeit herangezogen.

Entsprechend ist zu bevorzugen, dass der jeweils berechnete Vorgabewert für das Steuersignal in Richtung einer höheren Widerstandskraft verändert wird, falls die zuletzt bestimmte Geschwindigkeit (vi) größer oder gleich der unmittelbar davor bestimmten Geschwindigkeit (vi-1) ist.

Eine weitere Verbesserung des Verfahrens ergibt sich daraus, dass der jeweils berechnete Vorgabewert für das Steuersignal in Richtung einer niedrigeren Widerstandskraft verändert wird, falls die zuletzt bestimmte Geschwindigkeit (vi) um so viel kleiner ist als die unmittelbar davor bestimmte Geschwindigkeit (vi-1), dass bei konstanter weiterer Veränderung der Geschwindigkeit die Geschwindigkeit (vx) den Wert Null erreichen würde, bevor die Intervallgrenze (se) des Verschiebeweges erreicht ist.

In dieser Variante der Erfindung besteht eine bevorzugte Ausführungsform darin, dass der jeweils berechnete Vorgabewert für das Steuersignal in Richtung einer höheren Widerstandskraft verändert wird, falls eine Gruppe von zuletzt bestimmten Geschwindigkeitswerten (vi, vi-1) größer oder gleich der unmittelbar davor bestimmten Gruppe von Geschwindigkeitswerten (vi-1, vi-2) ist.

Eine weitere Verbesserung in dieser Variante der Erfindung besteht darin, dass der jeweils berechnete Vorgabewert für das Steuersignal in Richtung einer niedrigeren Widerstandskraft verändert wird, falls die zuletzt bestimmte Gruppe von Geschwindigkeitswerten (vi, vi-1) um so viel kleiner ist als die unmittelbar davor bestimmte Gruppe von Geschwindigkeiten (vi-1, vi-2), dass bei konstanter weiterer Veränderung der Geschwindigkeit die Geschwindigkeit (vx) den Wert Null erreichen würde, bevor die Intervallgrenze des Verschiebeweges erreicht ist.

In einer Vereinfachung wird in der Erfindung vorgeschlagen, die Berechnung der für das Ende des Intervalls erwarteten Geschwindigkeit durch eine Tabelle mit Vorgabe-Geschwindigkeiten für jeden der vorgegebenen Zeitpunkte oder für jede der vorgegebenen Positionen, an denen eine Messung erfolgt, zu ersetzen. Entsprechend kann die Widerstandskraft angehoben werden, wenn die jeweils momentan gemessene Geschwindigkeit die Vorgabe-Geschwindigkeit überschreitet. Eine Absenkung der Widerstandskraft kann erfolgen, wenn die Vorgabe-Geschwindigkeit unterschritten wird. Die Anhebung oder Absenkung der Widerstandskraft erfolgt durch eine entsprechende Berechnung des Vorgabewertes für das Steuersignal und der Ausgabe an die Steuerung. Mit Vorteil sind mehrere Sätze für solche Vorgabe-Geschwindigkeiten vorgesehen, wobei die Werte der ersten drei gemessenen momentanen Geschwindigkeiten bestimmen, welcher Satz ausgewählt wird für die weitere Regelung.

In einer weiteren Vereinfachung wird in der Erfindung vorgeschlagen, ganz auf die Berechnung der momentanen Geschwindigkeiten zu verzichten und nur die Positionen in Abhängigkeit von den Zeitpunkten zu ermitteln und mit Vorgabewerten zu vergleichen. Dabei ist es möglich, jeweils die abgelaufene Zeit bis zum Erreichen der jeweils vorgegebenen Positionen zu bestimmen und mit einer Vorgabe-Zeit zu vergleichen. Diese Variante ist besonders einfach technisch zu realisieren. Mit Hilfe fester Wegmarkierungen und einem darauf gerichteten Sensor kann durch einfaches Abzählen der entsprechende Index i aus der Tabelle ausgelesen werden und somit der Vergleich durchgeführt werden. Alternativ, und als mathematisch äquivalent anzusehen, können auch die Positionen, das heißt die jeweils zurückgelegten Wegstrecken der Verschiebung, zu fest vorgegebenen Zeitpunkten bestimmt werden. In diesem Fall ist allerdings eine etwas aufwändigere Wegmessung erforderlich, da der Weg quasi kontinuierlich gemessen werden können muss. Mathematisch muss zwischen den beiden Alternativen nur beachtet werden, dass gemessene längere abgelaufene Zeiten bei definierten Positionen mit langsameren Geschwindigkeiten korrelieren und die Widerstandskraft entsprechend abgesenkt werden muss, während gemessene längere zurückgelegte Wegstrecken bei fest vorgegebenen Zeitpunkten mit höheren Geschwindigkeiten korrelieren und die Widerstandskraft entsprechend erhöht werden muss.

Auch in diesem Fall sind mit Vorteil mehrere Sätze von Tabellen mit den Vorgabe-Zeiten, oder entsprechend alternativ mit den jeweils zurückgelegten Wegstrecken oder Positionen, vorgesehen. Mit Vorteil wird anhand der ersten und/oder der zweiten gemessenen abgelaufenen Zeiten bis zum Erreichen der ersten und/oder zweiten vorgegebenen Positionen die jeweils anzuwendende Tabelle bestimmt. Analoges gilt für eine Tabelle mit Vorgabe-Positionen.

Mit Vorteil erfolgt die Anpassung der Widerstandskraft und entsprechend des Steuersignals über einen Proportionalitätsfaktor k, der weiter bevorzugt abhängig von der zurückgelegten Wegstrecke ist. Im einfachsten Fall erfolgt die Veränderung des Proportionalitätsfaktors ebenfalls proportional zur zurückgelegten Wegstrecke.

Die Auslösung der Regelung kann in einfacher Weise über ein im Fahrzeug vorhandenes Erkennungssystem für einen Crash (= Aufprall des Fahrzeuges auf ein Hindernis) erfolgen. Es ist auch denkbar und möglich, die Auslösung über das Airbag-Steuerungssystem zu steuern.

In einer Weiterbildung der Erfindung ist es auch denkbar und möglich, allein aus dem Auftreten von hohen Geschwindigkeiten der Verschiebung der Lenkspindellagereinheit gegenüber der Konsoleneinheit auf den Crash zu schliessen und die Regelprozeduren zu starten. Dazu muss allerdings die Messung der Position immer aktiv sein.

Weitere Merkmale und Einzelheiten bevorzugter Ausgestaltungsformen der Erfindung werden anhand der beigelegten Figuren erläutert. Es zeigen:
- Fig. 1: Darstellung eines ersten Ausführungsbeispiels für die Erfindung;
- Fig. 2: Darstellung eines Spannelements eines für die Erfindung geeigneten Energieabsorbers in Anordnung als Spanntrommel;
- Fig. 3: Darstellung des ersten Ausführungsbeispiels der Erfindung im Querschnitt in einer ersten Stellung;
- Fig. 4: Darstellung des ersten Ausführungsbeispiels für die Erfindung im Querschnitt in einer zweiten Stellung;
- Fig. 5: Darstellung eines zweiten Ausführungsbeispiels für die Erfindung;
- Fig. 6: Darstellung eines zweiten Ausführungsbeispiels für die Erfindung im Querschnitt in einer ersten Stellung;
- Fig. 7: Darstellung des zweiten Ausführungsbeispiels für die Erfindung im Querschnitt in einer zweiten Stellung;
- Fig. 8: Darstellung eines Längenverlaufes für den Draht, der die Veränderung der Widerstandskraft steuert, in Abhängigkeit von der Temperatur des Verformungselementes;
- Fig. 9: Darstellung der Temperatur des Drahtes als Funktion des Stroms, der durch das Verformungselement fließt;
- Fig. 10: Darstellung der Verschiebekraft der Lenkspindellagereinheit gegenüber der Konsoleneinheit, als Funktion des Stromflusses durch den Draht.
- Fig. 11: Beispiele für Weg-Zeit-Verläufe im Crash-Fall;
- Fig. 12: Beispiel für einen Weg-Geschwindigkeitsverlauf mit zu niedriger Anfangsgeschwindigkeit;
- Fig. 13: Beispiel für einen Weg-Geschwindigkeitsverlauf mit zu großer Anfangsgeschwindigkeit;
- Fig. 14: Beispiel für Geschwindigkeits-Zeitverlauf mit zu niedriger Anfangsgeschwindigkeit;
- Fig. 15: Beispiel für Geschwindigkeits-Zeitverlauf mit zu großer Anfangsgeschwindigkeit;
- Fig. 16: Darstellung eines Steuerstromverlaufs in Abhängigkeit von den Positionen der Lenkspindellagereinheit im Crashfall, im Fall von zu großer Widerstandskraft zu Beginn des Crashs;
- Fig. 17: Darstellung eines Steuerstromverlaufs in Abhängigkeit von den Positionen der Lenkspindellagereinheit im Crashfall, im Fall von zu kleiner Widerstandskraft zu Beginn des Crashs; sowie

- Fig. 18: Darstellung eines Weg-Zeitverlaufs eines Crashvorgangs.

Gleichartige oder gleichwirkende Elemente werden, wie auch in den weiteren Figuren mit denselben Bezugszeichen bezeichnet.

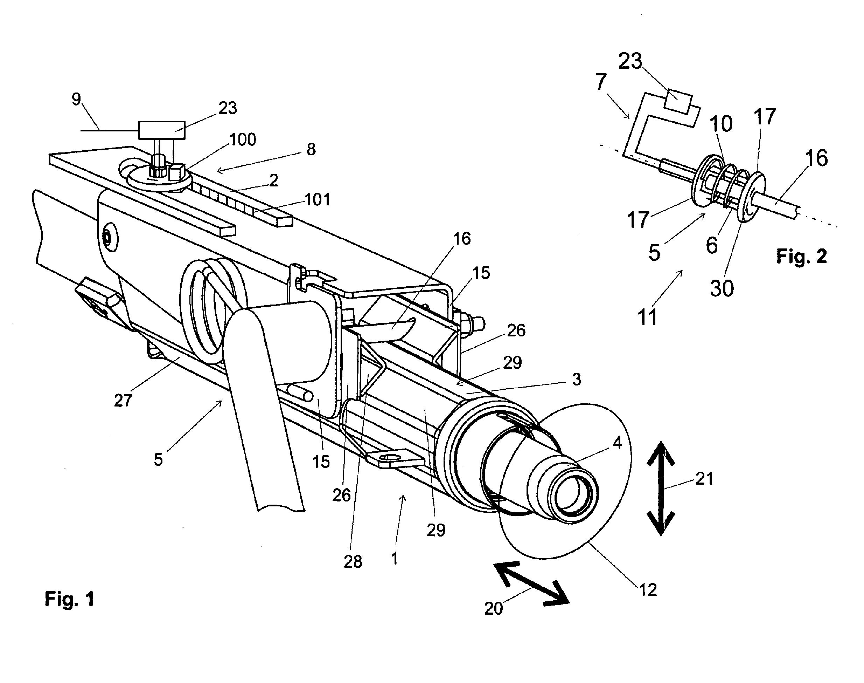

In den Figuren 1, 3 und 4 ist ein erstes Ausführungsbeispiel für ein erfindungsgemäßes Verfahren veranschaulicht.

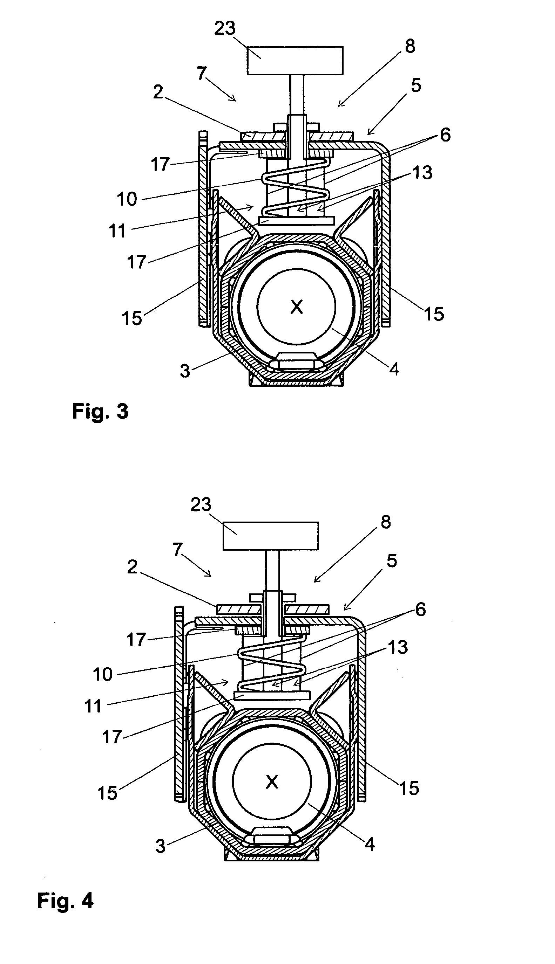

Fig. 1 zeigt eine perspektivische Darstellung der Lenksäule 1. Die Fig. 3 und 4 zeigen einen Vertikalschnitt im Bereich des Energieabsorbers 8. Es handelt sich im Grundaufbau der Lenksäule 1 um eines von vielen beim Stand der Technik an sich bekannten Beispielen, wie eine solche verstellbare Lenksäule ausgebildet sein kann. Auch im gezeigten Beispiel ist die Lenkspindel 4, an der das Lenkrad 12 befestigt wird, drehbar in der Lenkspindellagereinheit 3 gehalten. Die Lenkspindellagereinheit 3 ist gemeinsam mit der Lenkspindel 4 relativ zur Konsoleneinheit 2 verstellbar. Im ersten Ausführungsbeispiel ist sowohl eine Verstellung parallel zur Längsrichtung 20 der Lenkspindel 4, also eine Längenverstellung, als auch eine Verstellung in einer Richtung 21 orthogonal zur Längsrichtung der Lenkspindel 4, also eine Höhenverstellung, vorgesehen. Hierzu ist die Lenkspindellagereinheit 3 des gezeigten Beispiels, wie an sich bekannt, zwischen Seitenwangen 15 der Konsoleneinheit 2 gelagert. Durch entsprechende Langlöcher oder dergleichen, wie sie beim Stand der Technik bekannt sind, sind die genannten Verstellrichtungen in Längsrichtung 20 und Höhenrichtung 21 realisierbar. In dieser Ausführungsform sind eine Fixiereinrichtung 5 und ein Energieabsorber 8 vorgesehen. In der Schließstellung hält die Fixiereinrichtung 5 die Lenkspindellagereinheit 3 in ihrer Lage relativ zur fahrzeugfesten Konsoleneinheit 2 fixiert. Die Fixierung erfolgt dabei über eine reibschlüssige oder formschlüssige Verbindung. Im Falle der reibschlüssigen Fixierung erfolgt die Verbindung zwischen den Seitenwangen 15 der Konsoleneinheit 2 und Seitenflächen 26 eines Schwenkhebels 27 und zwischen Seitenflächen 28 des Schwenkhebels 27 und Seitenflächen 29 der Lenkspindellagereinheit 3. Im Falle einer formschlüssigen Fixierung erfolgt die Verbindung üblicherweise über hier nicht dargestellte Verzahnungen, die in Eingriff gebracht werden. Erreicht wird die Fixierung mittels der Fixiereinrichtung 5, deren Seitenfläche in der Schließstellung gegen die Seitenfläche der Seitenwange 15 gepresst wird. In der Öffnungsstellung der Fixiereinrichtung 5 kann die gewünschte Verstellung der Lenkspindellagereinheit 3 relativ zur fahrzeugfesten Konsoleneinheit 2 vorgenommen werden. Anschließend wird durch Überführen der Fixiereinrichtung in die Schließstellung die Lage der Lenkspindellagereinheit 3 relativ zur Konsoleneinheit 2 wieder fixiert. Die Schließstellung sollte zumindest dann eingestellt sein, wenn das Fahrzeug bewegt wird. Die Konsoleneinheit 2 kann durch entsprechende Laschen (hier nicht weiter dargestellt), wie sie beim Stand der Technik bekannt sind, am Kraftfahrzeug montiert und damit fixiert werden.

Der Antrieb des Energieabsorbers 8 ist in den Ausführungsbeispielen trommelartig als Spanntrommel 11 ausgebildet (vgl. Fig. 2). Er weist zwei einander gegenüberliegend angeordnete Platten 17 auf. Zwischen diesen Platten 17 verläuft ein in den Ausführungsbeispielen als Draht 6 ausgebildetes, mehrfach umgelenktes Verformungs-Element. Im gezeigten Ausführungsbeispiel besteht der Draht 6 aus einer Formgedächtnislegierung, welche sich durch Erhitzen verkürzt bzw. zusammenzieht. Zusätzlich ist zwischen den Platten 17 auch ein hier als Schraubenfeder ausgebildetes elastisches Rückstellelement 10 angeordnet. Die beiden Platten 17 werden mittels des Drahtes 6 aufeinander zu bewegt, wenn der Draht 6 entsprechend beheizt wird. Der Abstand der Platten 17 zueinander wird somit verkürzt. Das Rückstellelement 10 wirkt dieser Verkürzung entgegen und drückt die Platten 17 wieder parallel zur Längsrichtung des Spannbolzens 16 auseinander, wenn der Draht 6 wieder entsprechend abgekühlt ist bzw. wurde, womit wieder die zweite Stellung erreicht wird. Die Spanntrommel 11 kann mit einem Befestigungsbolzen an einer geeigneten Stelle positioniert werden und über die Seitenfläche 30 eine Spannkraft auf entsprechend angeordnete Flächenabschnitte bewirken. Durch die Ansteuerung kann diese Spannkraft und eine entsprechend wirkende Reibkraft im Falle einer Verschiebung variiert werden.

Im Falle eines Aufpralls des Fahrers auf die Lenksäule (Crash) wird die gewünschte Verschiebekraft, die eine Energieabsorption bewirken soll, durch den Energieabsorber 8 eingestellt. Hierzu erhält die Steuerung 23 ein Crash-Signal 9 und bestromt im Bedarfsfall den Draht 6 der Spanntrommel 11. Dadurch wird eine entsprechende Spannkraft auf die reibschlüssige Verbindung zwischen der Konsole 2 und einem mit der Lenkspindellagereinheit 3 verbundenen Bauteil aufgebracht. Dies führt zu einem definierten Kraftniveau für die Widerstandskraft gegen die Verschiebung der Lenkspindellagereinheit 3 gegenüber der Konsoleneinheit 2.

Wie auch anhand der weiteren Ausführungsbeispiele erläutert wird, kann diese Widerstandskraft durch die entsprechend eingestellte Bestromung des Drahts 6 sogar während des Crashvorgangs variiert werden, sodass eine genaue Anpassung des Energieabsorptionsverhaltens an den Crashverlauf ermöglicht ist.

Beispielhaft sind in den Fig. 3 eine mögliche erste Stellung und in Fig. 4 eine mögliche zweite Stellung veranschaulicht. Da Kraftwerte nur schwer darstellbar sind, wurde als Behelf der Abstand zwischen den Reibflächen als Veranschaulichung gewählt. In der Fig. 3, in der mit Vorteil keine Bestromung des Drahts 6 erfolgt, ist ein höheres Kraftniveau, beispielsweise eine obere Grenzkraft Fmax für die Widerstandskraft gegen die Verschiebung der Lenkspindellagereinheit 3 gegenüber der Konsoleneinheit 2 dargestellt. Die Reibflächen pressen mit hoher Kraft aufeinander und bei einer Verschiebung stellt sich die entsprechend hohe Reibkraft ein.

Wird der Draht 6 mit einem maximalen Strom Imax bestromt, erfolgt eine Erwärmung auf die obere Grenztemperatur Tmax und entsprechend dem Beispiel verkürzt sich der Draht 6. Dadurch verkürzt sich der Abstand zwischen den Platten 11, sodass die Reibflächen nur mit geringer Kraft gegeneinander gepresst sind. Dadurch wird eine untere Grenzkraft Fmin für die Widerstandskraft gegen die Verschiebung der Lenkspindellagereinheit 3 gegenüber der Konsoleneinheit 2 dargestellt. Denkbar und möglich ist es sogar, dass sich ein kleines Spiel zwischen den Reibflächen einstellt, wie dies in Fig. 3 zur Veranschaulichung der niedrigeren Kraft übertrieben dargestellt ist.

Durch eine entsprechende Bestromung mit Zwischenwerten zwischen Imax und Null können auch Zwischenwerte für die Presskraft und die damit einhergehende Reibkraft eingestellt werden

Weiter umfasst die Lenksäule einen Sensor 100, der eine Markierung 101 abtastet. Im Beispiel handelt es sich um einen Hallsensor, der eine Rippung oder Verzahnung abtastet, welche in der Seite des Langloches entlang dem die Verschiebung erfolgen kann angeordnet ist, abtastet.

Die Auslegung der Kräfte und Ströme und dergleichen ist an den weiteren Ausführungsbeispielen erläutert.

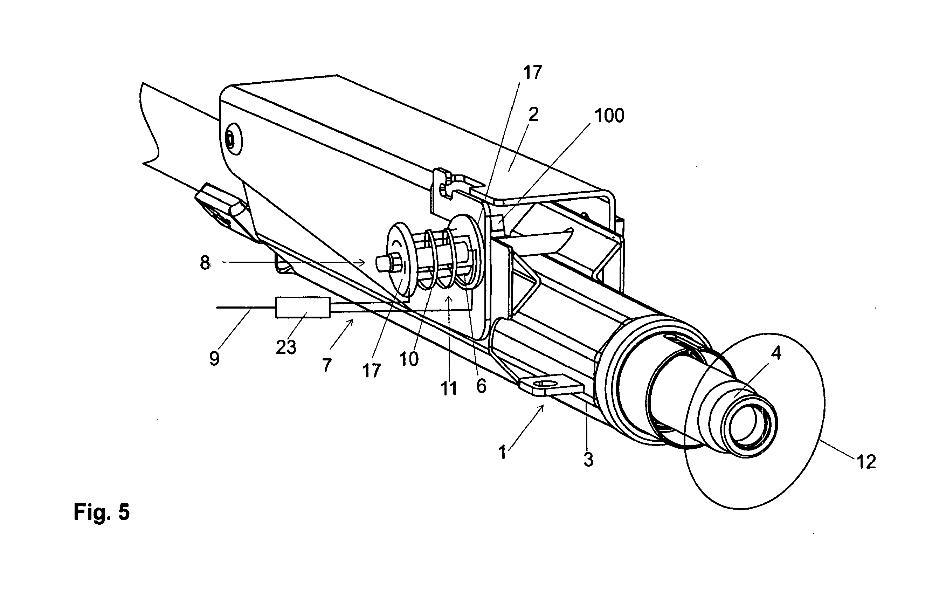

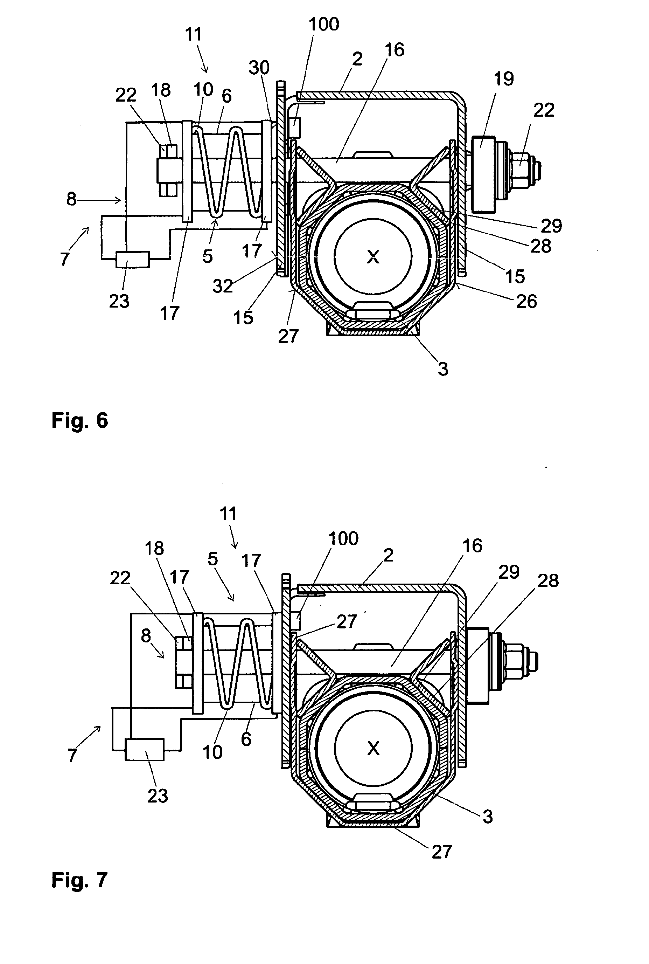

Das zweite Ausführungsbeispiel ist in den Fig. 5 bis 7 dargestellt. Es ist dem ersten Ausführungsbeispiel sehr ähnlich, bis auf dass der Energieabsorber 8 in die Fixiereinrichtung 5 integriert ist bzw. beide Einrichtungen eine einzige Einrichtung darstellen. Fig. 5 zeigt eine perspektivische Darstellung der Lenksäule 1. Die Fig. 6 und 7 zeigen einen Vertikalschnitt im Bereich des Energieabsorbers 8. Es handelt sich um den Grundaufbau, der zum ersten Ausführungsbeispiel bereits beschrieben wurde. In dieser Ausführungsform sind die Fixiereinrichtung 5 und der Energieabsorber 8 als eine einzige kombinierte Einrichtung ausgebildet. In der Schließstellung hält der Energieabsorber 8 die Lenkspindellagereinheit 3 in ihrer Lage relativ zur fahrzeugfesten Konsoleneinheit 2 fixiert. Die Fixierung erfolgt dabei über die reibschlüssige Verbindung zwischen den Seitenwangen 15 der Konsoleneinheit 2 und Seitenflächen 26 eines Schwenkhebels 27 und zwischen Seitenflächen 28 des Schwenkhebels 27 und Seitenflächen 29 der Lenkspindellagereinheit 3. Erreicht wird die Fixierung mittels des Energieabsorbers 8, dessen Seitenfläche 30 in der ersten Stellung gegen die Seitenfläche 32 der Seitenwange 15 gepresst wird. Dabei sollte die erste Stellung mit der oberen Grenzkraft Fmax korrespondieren. In der zweiten Stellung des Energieabsorbers kann die gewünschte Verstellung der Lenkspindellagereinheit 3 relativ zur fahrzeugfesten Konsoleneinheit 2 vorgenommen werden. Entsprechend sollte die zweite Stellung mit der unteren Grenzkraft Fmin, die natürlich entsprechend klein sein soll, korrespondieren. Anschließend wird durch Überführen des Energieabsorbers in die erste Stellung die Lage der Lenkspindellagereinheit 3 relativ zur Konsoleneinheit 2 wieder fixiert. Die erste Stellung sollte zumindest dann eingestellt sein, wenn das Fahrzeug bewegt wird. Die Konsoleneinheit 2 kann durch entsprechende Laschen (hier nicht weiter dargestellt), wie sie beim Stand der Technik bekannt sind, am Kraftfahrzeug montiert und damit fixiert werden.

Der Grundaufbau weist im zweiten Ausführungsbeispiel einen Spannbolzen 16 auf, welcher durch die Seitenwangen 15 hindurchgeführt ist. An den Enden des Spannbolzens 16 werden mittels Schrauben 22 der Anschlag 18 und das Widerlager 19 befestigt. Auf der linken Seite befindet sich zwischen dem Anschlag 18 und der Seitenwange 15 der Konsoleneinheit 2 die erfindungsgemäß ausgebildete Spanneinrichtung 11. Die Druckfläche 30 und in Folge dessen auch das Widerlager 19 werden in der ersten Stellung gegen die Seitenwangen 15 der Konsoleneinheit 2 gepresst, wodurch die Lenkspindellagereinheit 3 reibschlüssig zwischen den Seitenwangen 15 geführt ist.

Der Sensor 100 tastet eine nicht näher dargestellte Kante ab, sodass die Messung der Position ermöglicht ist.

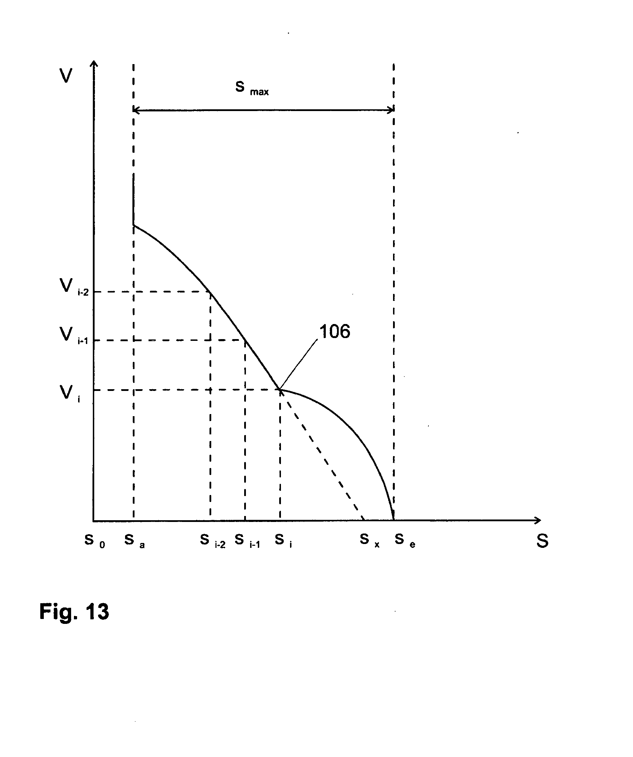

Fig. 6 zeigt die zweite Stellung des Energieabsorbers, in der die Lenkspindellagereinheit 3 relativ zur Konsoleneinheit 2 in Richtung 20 und/oder 21 verstellbar ist. In diesem Zustand gibt die Steuerung 23 der Heizeinrichtung 7 einen maximalen Strom Imax aus. Bei diesem Stromfluss erhitzt sich die Formgedächtnislegierung auf Grund ihres ohmschen Widerstandes über die obere Grenztemperatur Tmax, sodass es zur gewünschten Verkürzung des Drahtes auf die Länge L0 kommt. Hierdurch werden die Platten 17 gegen die Federkraft des Rückstellelementes 10 aufeinander zu bewegt. Hierdurch wird, wie in Fig. 6 veranschaulicht, der Energieabsorber entspannt, sodass die Lenkspindellagereinheit 3 nicht mehr zwischen den Seitenwangen 15 klemmend gehalten ist. Die Widerstandskraft gegen die Verschiebung der Lenkspindellagereinheit 3 unterschreitet, damit den Wert der unteren Grenzkraft Fmin auf den der Energieabsorber bei der Konstruktion der Lenksäule ausgelegt wird (vgl. Fig. 13- 15). Fig. 7 zeigt den stromlosen Zustand des Energieabsorbers , bei dem sich diese in der ersten Stellung befindet, in der die Lenkspindellagereinheit 3 in ihrer Lage relativ zur Konsoleneinheit 2 fixiert ist. Die Steuerung 23 führt keinen Strom durch den Draht 6, sodass dieser nicht beheizt wird. Die Temperatur des Drahtes 6 liegt in der Situation gemäß Fig. 4 unter der Grenztemperatur Tmin, sodass das Rückstellelement 10 die Platten 17 auseinanderdrücken kann. Dadurch werden entsprechend dem ersten Ausführungsbeispiel die Seitenwangen und die korrespondierenden Flächenpaare 30, 32, 26, 27, 28, 29, und die Seitenwangen 15 mittels Spannbolzen 16 aufeinander zu gepresst, womit die Lenkspindellagereinheit 3 klemmend in ihrer Position fixiert ist. Die Widerstandkraft gegen die Verschiebung der Lenkspindellagereinheit 3 übersteigt damit den Wert der oberen Grenzkraft Fmax, auf den der Energieabsorber bei der Konstruktion der Lenksäule ausgelegt wird (vgl. Fig. 13-15).

Um den Schaltvorgang bei der Überführung des Energieabsorbers von der zweiten Stellung gemäß Fig. 6 in die erste Stellung gemäß Fig. 7 möglichst rasch ablaufen zu lassen, kann neben der Heizeinrichtung 7 eine Kühleinrichtung vorgesehen sein. Diese kann beispielsweise als Gebläse ausgebildet sein.

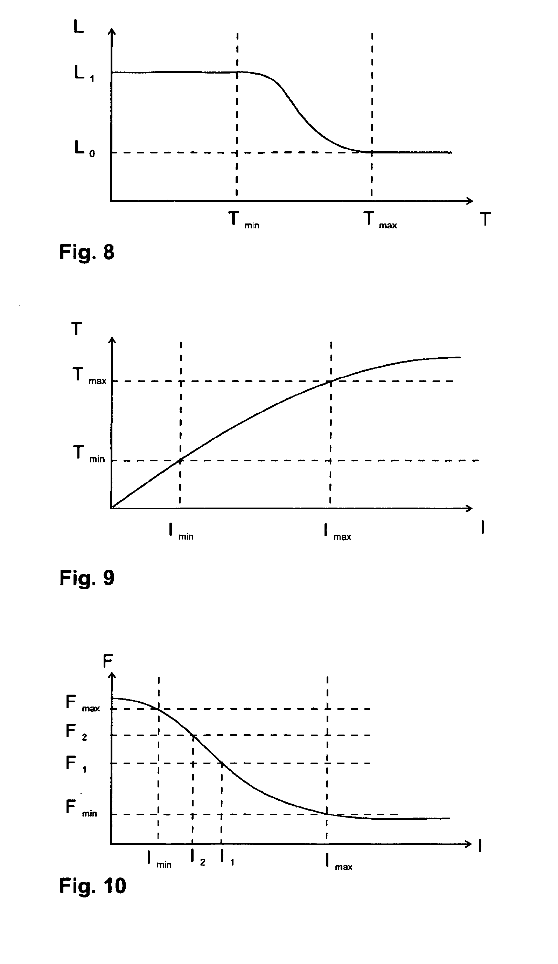

Wie in den Beispielen veranschaulicht ist, kann die Bestromung des Drahtes auf verschiedene Weisen erfolgen. Entsprechend der Darstellung in den Ausführungsbeispielen, beispielsweise gemäß der Figuren 2, 3, 6 und 7, erfolgt die Bestromung des Drahtes durch eine Kontaktierung der beiden Enden des Drahtes mit der Steuerung 23. Für diesen Fall ist es erforderlich, die Umlenkstellen die auch als Umlenkrollen ausgebildet sein können, gegen Stromfluss isoliert auszulegen. Alternativ kann in allen Ausführungsbeispielen die Bestromung auch über die Scheiben 17 und/oder die Umlenkstellen und/oder die Umlenkrollen erfolgen, wie dies beispielsweise in der Figur 8 veranschaulicht ist. Entsprechend werden für diese Ausführung die Scheiben 17 und/oder die Umlenkstellen und/oder die Umlenkrollen mit der Steuerung 23 kontaktiert.

Die Figuren 8, 9 und 10 veranschaulichen beispielhaft, wie eine entsprechende Längenveränderung des Drahtes 6 und eine daraus resultierende Veränderung der Widerstandskraft gegen eine Verschiebung der Lenkspindellagereinheit gegenüber der Konsoleneinheit einstellbar ist. Im Beispiel ist der Einsatz einer Formgedächnislegierung dargestellt, die bei einer höheren Temperatur eine kürzere Länge aufweist als bei einer niedrigen Temperatur. Bei Raumtemperatur beziehungsweise einen entsprechend in einem Kraftfahrzeug als Raumtemperatur anzusehenden Temperaturbereich, hat die als Draht ausgebildete Formgedächtnislegierung zunächst eine Länge L1. Bei einem Kraftfahrzeug ist dieser Temperaturbereich üblicherweise zwischen -40° und +80° anzusetzen. Entsprechend muss die Formgedächtnislegierung ausgewählt werden, die für diesen Draht eingesetzt wird. Übersteigt die Temperatur eine untere Grenztemperatur Tmin, so beginnt sich die Länge des Drahtes zu verkürzen. Um den Anforderungen in einem Kraftfahrzeug Rechnung zu tragen, sollte diese untere Grenztemperatur Tmin > 90°C oder mehr bevorzugt > 100°C betragen. Steigt die Temperatur über dieser untere Grenztemperatur Tmin weiter an, so verringert sich die Länge des Drahtes, bis eine obere Grenztemperatur Tmax erreicht ist, ab der sich die Länge des Drahtes nur unwesentlich verändert. Um den Energieabsorber als Energieabsorptionsmittel im Crashfall zu verwenden, muss daher im Crashfall eine Temperatur innerhalb des Bereiches zwischen und einschließlich den Grenztemperaturen Tmin und Tmax eingestellt werden. Es ist allerdings auch denkbar und möglich als erste Temperatur einfach die Raumtemperatur zu wählen und dafür ein definiertes Kraftniveau für die Verschiebung bei der Konstruktion des Lenksystems derart auszulegen, dass eine erste geeignete Energieabsorption und keine Fixierung erfolgt. Derartige Systeme sind dann in der Regel nicht gleichzeitig als Fixiereinrichtung geeignet.

In der Figur 9 ist veranschaulicht, wie eine entsprechende Temperatur T durch einen Stromfluss I durch den Draht eingestellt werden kann. Mit anwachsenden Strom I steigt die Temperatur T im Draht. Nach Erreichen eines unteren Grenzstroms Imin ist die untere Grenztemperatur Tmin im Draht erreicht und nach Erreichen eines oberen Grenzstroms Imax ist die entsprechende obere Grenztemperatur Tmax im Draht erreicht. Wird dieser Draht entsprechend der Erfindung in einem Energieabsorber eingesetzt, beispielsweise als Komponente in einer Spanntrommel 11, so ergibt sich aus der jeweiligen Länge eine entsprechende Spannkraft zur Verspannung der Lenksäulenlagereinheit 3 gegenüber der Konsoleneinheit 2. Durch ein entsprechendes Design können dabei entsprechende Kraftwerte, die als Widerstandskraft gegen eine Verschiebung der Lenkspindellagereinheit wirken, dimensioniert werden. Im Falle des Einsatzes des Energieabsorbers auch als Fixiereinrichtung ist sicherzustellen, dass für die erste Stellung des Energieabsorbers eine vom Fahrzeughersteller vorgegebene obere Grenzkraft Fmax dargestellt wird. Derartige obere Grenzkräfte Fmax liegen üblicherweise in Bereichen von 5.000 oder sogar 10.000 N.

Im Falle des Einsatzes des Energieabsorbers auch als Fixiereinrichtung soll in der zweiten Stellung des Energieabsorbers der Fahrer die Lenkspindellagereinheit beziehungsweise das an der Lenkspindel 4 befestigte Lenkrad 12 leicht verschieben können, wobei leicht bedeutet, dass die Widerstandskraft eine vorgegebenen untere Grenzkraft Fmin nicht überschreiten soll. Auch dieser Wert kann im Design entsprechend ausgelegt werden, wobei die Drahtlänge, die Anzahl der Umlenkungen, der Abstand der beiden Platten 17. die Größe der beiden Platten 17 und noch weitere Parameter, auch der Lenksäule selbst, zur Dimensionierung genutzt werden können. Es ist auch denkbar und möglich, eine, zwei oder auch mehrere Spanntrommeln einzusetzen, um die geforderten Parameter zu erreichen.

Es ist offensichtlich, dass diese Dimensionierungen in entsprechenden Versuchen zu überprüfen sind.

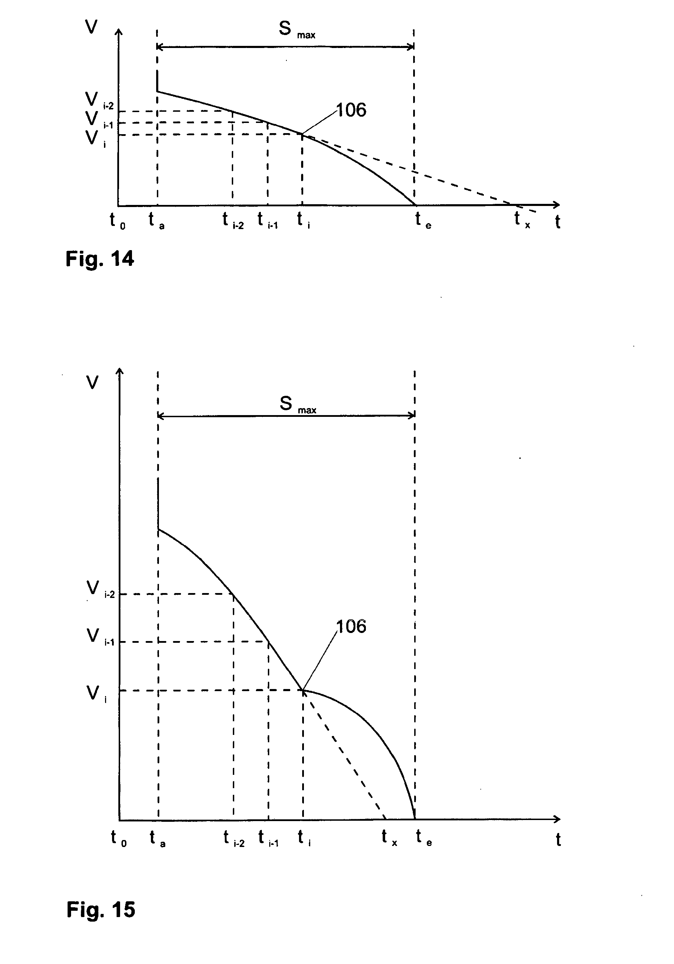

Weiterhin ist es möglich, mit dem erfindungsgemäßen Energieabsorber 8, Zwischenwerte F1, F2 für die Widerstandskraft gegen die Verstellung der Lenkspindellagereinheit einzustellen. Auf diese Weise können für verschiedene Parameter (großer, schwerer Fahrer, kleiner, leichter Fahrer, Fahrer angegurtet, Fahrer nicht angegurtet, Fahrzeuggeschwindigkeit, usw...) entsprechende Kraftwerte definiert und im Crashfall eingestellt werden. Als Beispiel sind in der Figur 15, zwei Kraftniveaus F1 und F2 dargestellt, die durch entsprechende Bestromung des Drahtes 6 mit dem Strom I1 und I2 einstellbar sind.

Wie in den Figuren 8 und 9 veranschaulicht ist, korrespondieren die Stromwerte I1 und I2 mit entsprechenden Temperaturen T1 und T2 und diese wiederum mit entsprechenden Längen L1 und L2 des Drahtes. Durch diese Korrespondenz ist die Auslegung der Anordnung einfach möglich.

Nachdem die prinzipielle Auslegung des steuerbaren Energieabsorbers erfolgt ist, kann die Regelcharakteristik festgelegt werden.

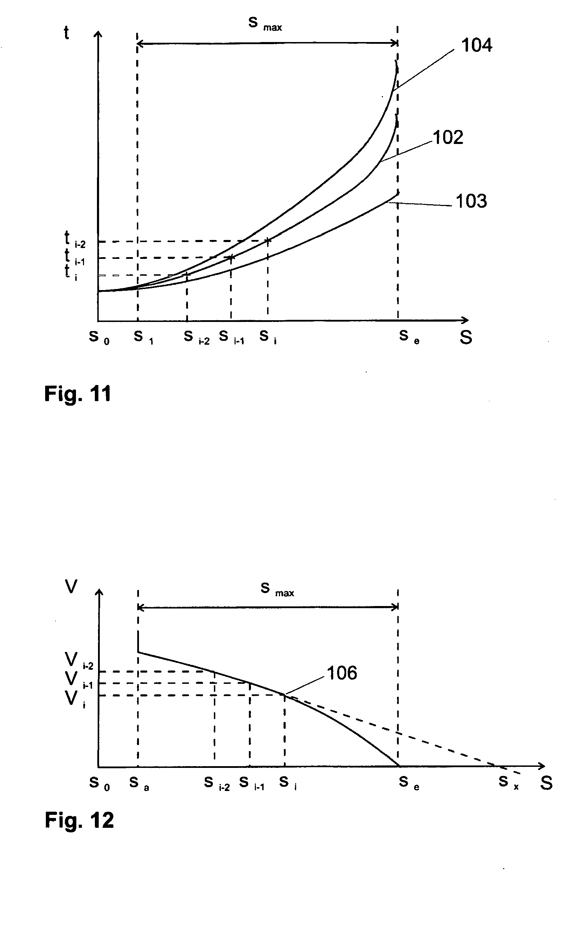

Fig. 11 veranschaulicht beispielhaft Wegzeitverläufe für eine Verschiebung der Lenkspindellagereinheit 3 gegenüber der karosseriefesten Konsoleneinheit 2 im Crashfall. Die Kurve 102 veranschaulicht dabei eine Sollkurve, die bevorzugt erreicht werden soll. Die Istkurve 103 veranschaulicht einen ungeregelten Crashverlauf, bei dem die Geschwindigkeit zu hoch, sodass es am Ende der Intervalllänge Smax zu einer Kraftspitze kommen würde. Die Istkurve 104 veranschaulicht einen Crashverlauf mit einer gegenüber dem idealen Verlauf überhöhten Abbremsung. Die Wegstrecke S ist dabei eingeteilt in einen Bereich zwischen S0, bei dem das Crashereignis festgestellt wird, und S1, der der Beginn der Verschiebung der Lenkspindellagereinheit gegenüber der Konsoleneinheit bedeutet. Die Verschiebung ist begrenzt auf eine maximale Verschieblänge Smax und endet entsprechend bei der Verschiebeposition Se. Die Bezeichnungen Si, Si-1, Si-2 beschreiben Zwischenwerte, die unmittelbar aufeinander folgen. Zur Regelung des steuerbaren Energieabsorbers wird in einer ersten Ausführung die momentane Geschwindigkeit zu den jeweiligen Positionen bestimmt.

In den Fig. 12 und 13 sind entsprechende Geschwindigkeits-Weg-Diagramme dargestellt, wie sie für unterschiedliche Crashsituationen eintreten können. In Fig. 12 stellen sich zu den Positionen Si-2, Si-1 und Si, die Geschwindigkeiten Vi-2, Vi-1, bzw. Vi ein. Entsprechend diesem Beispiel erfolgt die Messung der verstrichenen Zeit bis zum Erreichen der jeweiligen Positionen Si-2, Si-1, Si. Durch die einfache Division aus Weg und Zeit wird die Geschwindigkeit an der jeweiligen Position Si bestimmt. Daraus wird der Positionswert Sx vorherberechnet, bei dem die Geschwindigkeit den Wert Null bei gleichbleibender Widerstandskraft erreichen wird. Entsprechend der Fig. 12 ist zu erkennen, dass der Wert Sx größer als der im Intervall Smax zur Verfügung stehende Weg ist. Entsprechend würde an der Endposition Se des Intervalls noch eine erhöhte Verschiebegeschwindigkeit vorliegen, die plötzlich zu Null abgebremst würde. Um dem zu begegnen, regelt die Steuerung den Stromwert derart, dass die Widerstandskraft gegen eine weitere Verschiebung erhöht wird. Entsprechend den oben gemachten Ausführungsbeispielen würde ein Stromwert beispielsweise entsprechend der Fig. 10 von dem Wert I1 auf I2 verändert werden, um eine entsprechende Erhöhung der Widerstandskraft gegen die Verschiebung von F1 auf F2 zu erreichen. Der umgekehrte Fall ist in Fig. 13 veranschaulicht. Hier ergibt eine Hochrechung der Geschwindigkeit in Abhängigkeit von der Position der Lenkspindellagereinheit, dass die Geschwindigkeit den Wert Null bei einem Wert Sx einnimmt, der vor der Intervallgrenze Se liegt. Entsprechend kann die Widerstandskraft abgesenkt werden und damit der Fahrer "schonender" abgebremst werden.

Die Fig. 14 und 15 veranschaulichen vergleichbare Crashverläufe, allerdings bei Messung der Positionen zu den fest vorgegebenen Zeitpunkten ti-2, ti-1, ti. Die Vorgehensweise ist analog, wie sie anhand der Fig. 12 und 13 erläutert wurde.

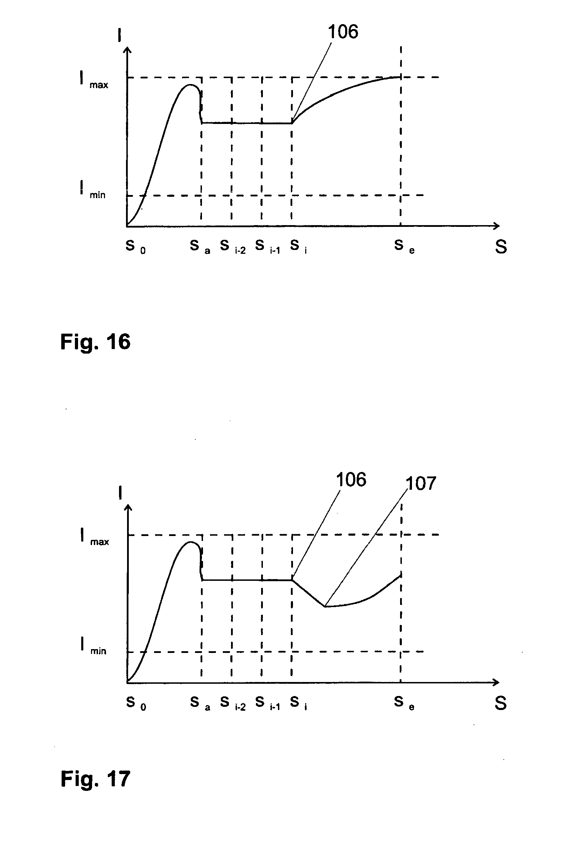

In den Fig. 16 und 17 sind Ansteuerströme für einen geregelten Verlauf der Energieabsorption dargestellt. Zu einem Anfangszeitpunkt, der mit einem Anfangsweg S0 verknüpft wird, beginnt der Crash. Dies kann beispielsweise durch ein Airbagsteuergerät detektiert werden und an die Steuerung 23 in Form des Crashsignals 9 übermittelt werden. Mit Vorteil wird auf das Crashsystem ein erhöhter Anfangsstrom aufgebracht, um das Loslösen der Lenkspindellagereinheit aus der gegenüber der Konsoleneinheit fixierten Position zu erleichtern. Hierbei ist zu beachten, dass der Übergang von der Haftreibung in die Gleitreibung stets unstetig ist und zur entsprechenden Kraftspitzen führen kann. Für die Erwärmung des Drahtes wird stets eine gewisse Zeit benötigt. Entsprechend kann auch bei sofort eingeschaltetem Stromfluss noch ausreichend Widerstandskraft zur Verfügung stehen, um die sichere Funktion des Airbags gewährleisten zu können. Nachdem der Airbag seinen Druck wieder abgebaut hat und der Fahrer auf das Lenkrad prallt (bei Position S1) wird der Strom unmittelbar abgesenkt, um den Übergang von der Haftreibung in die Gleitreibung etwas abzufangen. An den verschiedenen Wegpositionen, hier beispielhaft dargestellt als Si-2, Si-1, Si, erfolgen die entsprechenden Messungen. Nach mindestens drei erfolgten Messungen kann eine Bewertung erfolgen, ob der gewünschte Geschwindigkeits- bzw. Beschleunigungsverlauf durch die voreingestellte Widerstandskraft erreicht wird. Im Fall der Fig. 16 ist veranschaulicht, wie die Widerstandskraft zunächst zu hoch war und entsprechend durch Erhöhung des Stromflusses mit dem Regeleingriff 106 abgesenkt werden muss. Die Fig. 16 korrespondiert etwa entsprechend mit den Darstellungen in den Fig. 13 und 15.

In der Fig. 17 ist der Fall dargestellt, bei dem die anfänglich eingestellte Widerstandskraft zu niedrig war und der Fahrer mit einer zu hohen Geschwindigkeit am Ende des Intervalls ankommen würde. Entsprechend wird durch Absenken des Stromflusses beim Regeleingriff 106 eine Erhöhung der Widerstandskraft eingestellt. Sollte die Absenkung zu stark erfolgt sein können in weiteren Regeleingriffen, hier beispielsweise im Regeleingriff 107 veranschaulicht, weitere Verbesserungen erfolgen. Diese Fig. 17 korrespondiert analog mit den Darstellungen in den Fig. 12 und 14.

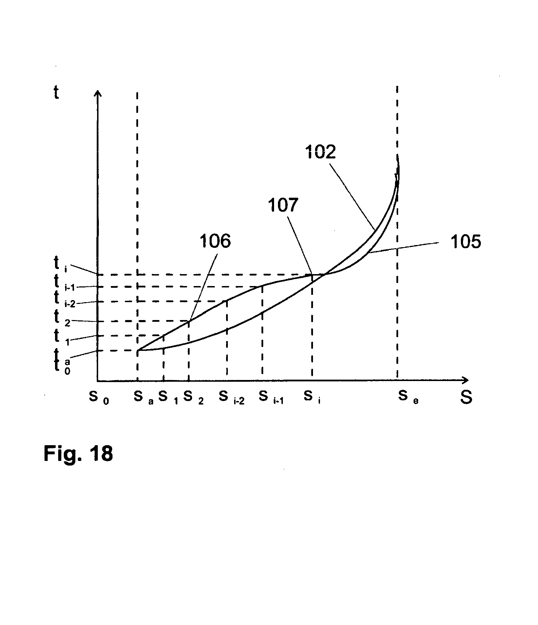

In der Fig. 18 ist ein Crashverlauf dargestellt, bei dem die bis zur Erreichung der jeweiligen Positionen si vergangenen Zeiten ti, aufgetragen sind. Die Position S0, die mit der Zeit t0 korrespondiert, deutet den Zustand vor dem Beginn der Verschiebung der Lenkspindellagereinheit an. Unmittelbar bei Beginn der Verschiebung wird die Position Sa verlassen und die Zeit auf 0 zurückgesetzt. Zu den Positionen S1, S2, S3...., Si-2, Si-1, Si,...Se werden die entsprechenden abgelaufenen Zeiten t1, t2, t3....ti-2, ti-1, ti,...te bestimmt. Gemäß einer Variante der Erfindung ist es vorgesehen, dass ein in einer Tabelle abgelegter Verlauf der Zeiten ti in Abhängigkeit von den Positionen Si durch entsprechende Einstellung der Widerstandskraft erreicht wird. Ein derartiger Musterverlauf ist mit der Sollkurve 102 dargestellt. Erfolgt nun eine Verschiebung der Lenkspindellagereinheit gegenüber der Konsole mit Abweichungen zu dieser vorgegebenen Sollkurve 102, so wird mit einem einfachen Proportionalregler der Steuerstrom angepasst, um entsprechend eine Annäherung an die Sollkurve 102 zu erreichen. Dies ist in der Istkurve 105 veranschaulicht, bei der mit den Regeleingriffen 106 und 107 jeweils regelnd eingegriffen wurde, was in einer entsprechenden Veränderung des Kurvenverlaufes widergespiegelt ist. Auf diese Weise kann mit einer sehr einfachen Regelung eine sehr gute Annäherung an den optimalen Verlauf der Energieabsorption durch die Lenksäule im Crashfall erreicht werden.

Es ist offensichtlich, dass die Sollkurve 102 sehr leicht in Abhängigkeit von ersten Messergebnissen variiert werden kann. In entsprechenden Crashversuchen können geeignete Sollkurven bestimmt werden.

Die Sollkurve 102 für die Vorgabe-Geschwindigkeiten vVi, für die Vorgabe-Positionen sVi und/oder für die Vorgabe-Zeiten (tVi) wird bei der Auslegung der Lenksäule bestimmt. Hierzu können verschiedene Szenarien vorgegeben werden. Insbesondere können für verschiedene Parameter: großer Fahrer, kleiner Fahrer, leichter Fahrer, schwerer Fahrer, Fahrer angegurtet, Fahrer nicht angegurtet und weitere Parameter nach Wahl Crashversuche mit Dummies durchgeführt oder in Simulationsrechnungen berechnet werden. Dabei werden entsprechende Istkurven ermittelt werden. Aus den Istkurven kann die auf die Lenkspindellagereinheit übertragene Energie bestimmt werden. Anhand der eingangs durchgeführten Überlegungen kann ein optimaler Kraftverlauf, mit dem die jeweilige Energie abgebaut wird, festgelegt werden. Aus dem optimierten Kraftverlauf lassen sich Sollkurven bestimmen, die an die jeweiligen Parameter angepasst sind. Anhand der ersten Messwerte (Position, Zeit, Geschwindigkeit) kann dann schnell entschieden werden, welche der vorher aufgezeichneten Istkurven dem momentanen Crashverlauf am ähnlichsten ist. Die für diese Istkurve ermittelte Sollkurve wird dann entsprechend als Sollkurve 102 für die Regelung ausgewählt.

Mit Vorteil kann in allen Ausführungsformen und -varianten der Erfindung der Startwert für den einzustellenden Strom bei Beginn des Crashvorgangs in Abhängigkeit von weiteren Parametern bestimmt werden, falls derartige Parameter bekannt sind. Solche Parameter können beispielsweise die Informationen und/oder Messwerte enthalten: ob der Fahrer angegurtet ist oder nicht, ob ein Gurtstraffer vorhanden ist oder nicht, welche Sitzposition der Fahrer einnimmt, welche Größe der Fahrer hat, welches Gewicht der Fahrer hat. Es sind auch weitere Parameter denkbar und möglich. Die entsprechenden Startwerte können bei der Auslegung des Systems, analog wie die Bestimmung der Sollkurven, bestimmt werden.

Ein besonderer Vorteil des erfindungsgemäßen Regelverfahrens besteht darin, dass keine aufwendigen Simulationsrechnungen zur Auslegung eines optimierten Crashverlaufs erforderlich sind. Durch Messungen, die eine Vielzahl von Parametern subsumieren, kann die Regelung ohne genaue Kenntnis der aktuell auftretenden Parameter, wie beispielsweise der Reibung, durchgeführt werden und zu einem optimalen Energieabsorptionsverhalten der Lenksäule führen.

Es ist offensichtlich, dass das erfindungsgemäße Verfahren auch auf andere steuerbare Energieabsorber anwendbar ist. So kann beispielsweise auch der in der GB2435551B dargestellte Mechanismus durch Hinzufügen einer Positionsmessung auf die erfindungsgemäße Weise angesteuert werden. In diesem Fall würde als Steuersignal ebenfalls ein Stromwert dienen. Durch die Anwendung eines Wirbelstroms als Erzeugung der Widerstandskraft würden allerdings höhere Stromwerte zu höheren Widerstandskräften und niedrigere Ströme zu niedrigeren Widerstandskräften führen. Entsprechend sind die Kurvenverläufe, wie sie in der Fig. 10 veranschaulicht sind neu aufzunehmen und die Regelung anzupassen.

Die Vielzahl der verschiedenen gezeigten Ausführungsbeispiele zeigt, dass die Erfindung in sehr vielen verschiedenen Varianten ausgebildet sein kann, ohne dass es hier möglich ist, alle denkbaren Varianten zu zeigen.

## Patentansprüche

1. Verfahren zur Regelung eines steuerbaren Energieabsorbers (8) in einem Lenksystem für ein Kraftfahrzeug mit folgenden Schritten:
a) Bestimmung einer Bewegungsgröße einer Relativbewegung zwischen einer zur fahrzeugfesten Fixierung am Kraftfahrzeug vorgesehenen Konsoleneinheit (2) und mit einer von der Konsoleneinheit (2) gehaltenen Lenkspindellagereinheit (3) zur drehbaren Lagerung einer Lenkspindel (4), wobei die Lenkspindellagereinheit (3) gegenüber der Konsoleneinheit (2) entlang eines Verschiebeweges in einem begrenzten Intervall (Smax) verschiebbar ist,
b) Ausgabe eines Steuersignals an einen steuerbaren Energieabsorber (8) zur Einstellung einer Widerstandskraft gegen eine Verschiebung der Lenkspindellagereinheit (3) relativ zu der Konsoleneinheit (2),
**dadurch gekennzeichnet, dass** zwischen dem Schritt a) und dem Schritt b) weiter folgende Schritte vorgesehen sind:
c) Bestimmung der Bewegungsgröße mittels eines Sensors (100) zur Bestimmung einer Position (s) der Lenkspindellagereinheit (3) entlang des Verschiebeweges
c1) durch Berechnung der momentanen Geschwindigkeit (vi) der Relativbewegung der Lenkspindellagereinheit,
d) Bestimmung eines Vorgabewertes für den Wert des Steuersignals zur Ausgabe an den Energieabsorber (8)
d1) auf Basis der momentanen Position (si) und der momentanen Geschwindigkeit (vi), mit der die momentane Relativbewegung erfolgt.

2. Verfahren zur Regelung eines steuerbaren Energieabsorbers (8) nach Anspruch 1, **dadurch gekennzeichnet, dass** der jeweils berechnete Vorgabewert für das Steuersignal in Richtung einer höheren Widerstandskraft verändert wird, falls die zuletzt bestimmte Geschwindigkeit (vi) größer oder gleich ist, wie die unmittelbar davor bestimmte Geschwindigkeit (vi-1) oder die zuletzt bestimmte Geschwindigkeit (vi) größer ist als eine jeweils vorgebbare Vorgabe-Geschwindigkeit (vVi).

3. Verfahren zur Regelung eines steuerbaren Energieabsorbers (8) nach einem der vorangehenden Ansprüche, **dadurch gekennzeichnet, dass** der jeweils berechnete Vorgabewert für das Steuersignal in Richtung einer niedrigeren Widerstandskraft verändert wird, falls die zuletzt bestimmte Geschwindigkeit (vi) um so viel kleiner ist, als die unmittelbar davor bestimmte Geschwindigkeit (vi-1), dass bei konstanter weiterer Veränderung der Geschwindigkeit die Geschwindigkeit (vx) den Wert Null erreichen würde, bevor die Intervallgrenze (se) des Verschiebeweges erreicht ist oder die zuletzt bestimmte Geschwindigkeit (vi) kleiner ist als eine jeweils vorgebbare Vorgabe-Geschwindigkeit (vVi).

4. Verfahren zur Regelung eines steuerbaren Energieabsorbers (8) nach Anspruch 1, **dadurch gekennzeichnet, dass** der jeweils berechnete Vorgabewert für das Steuersignal in Richtung einer höheren Widerstandskraft verändert wird, falls eine Gruppe von zuletzt bestimmten Geschwindigkeitswerten (vi, vi-1) größer oder gleich ist, wie die unmittelbar davor bestimmten Gruppe von Geschwindigkeitswerten (vi-1, vi-2).

5. Verfahren zur Regelung eines steuerbaren Energieabsorbers (8) nach Anspruch 4, **dadurch gekennzeichnet, dass** der jeweils berechnete Vorgabewert für das Steuersignal in Richtung einer niedrigeren Widerstandskraft verändert wird, falls die zuletzt bestimmte Gruppe von Geschwindigkeitswerten (vi, vi-1) um so viel kleiner ist, als die unmittelbar davor bestimmte Gruppe von Geschwindigkeiten (vi-1, vi-2), dass bei konstanter weiterer Veränderung der Geschwindigkeit die Geschwindigkeit (vx) den Wert Null erreichen würde, bevor die Intervallgrenze des Verschiebeweges erreicht ist.

## Claims

1. Method for regulating a controllable energy absorber (8) in a steering system for a motor vehicle, having the following steps:
a) determining a movement parameter of a relative movement between a bracket unit (2), which is provided for fixing securely to the motor vehicle, and a steering shaft bearing unit (3) held by the bracket unit (2) for pivot-mounting a steering shaft (4), wherein the steering shaft bearing unit (3) can be displaced with respect to the bracket unit (2) along a displacement path within a limited interval (Smax),
b) outputtin a control signal to a controllable energy absorber (8) for setting a resisting force against a displacement of the steering shaft bearing unit (3) relative to the bracket unit (2),
**characterised in that**, in addition, the following steps are provided between step a) and step b):
c) determining the movement parameter by means of a sensor (100) for determining a position (s) of the steering shaft bearing unit (3) along the displacement path
c1) by calculating the instantaneous speed (vi) of the relative movement of the steering shaft bearing unit,
d) determining a preset value for the value of the control signal for output to the energy absorber (8)
d1) based on the instantaneous position (si) and the instantaneous speed (vi), at which the instantaneous relative movement occurs.

2. Method for regulating a controllable energy absorber (8) according to Claim 1, **characterised in that** the respectively calculate preset value for the control signal is altered in the direction of a higher resisting force if the last determined speed (vi) is greater than or equal to the speed (vi-1) determined immediately before it or the last determined speed (vi) is greater than a respectively settable preset speed (vVi).

3. Method for regulating a controllable energy absorber (8) according to any one of the preceding claims, **characterised in that** the respectively calculated preset value for the control signal is altered in the direction of a lower resisting force if the last determined speed (vi) is lower than the speed (vi-1) determined immediately before it to the extent that in the case of a constant further change in speed the speed (vx) would reach a value of zero before the interval limit (se) of the displacement path is reached or the last determined speed (vi) is less than a respectively settable preset speed (vVi).

4. Method for regulating a controllable energy absorber (8) according to Claim 1, **characterised in that** the respectively calculated preset value for the control signal is altered in the direction of a higher resisting force if a group of last determined speed values (vi, vi-1) is greater than or equal to the group of speed values (vi-1, vi-2) determined immediately before it.

5. Method for regulating a controllable energy absorber (8) according to Claim 4, **characterised in that** the respectively calculated preset value for the control signal is altered in the direction of a lower resisting force if the last determined group of speed values (vi, vi-1) is lower than the group of speed values (vi-1, vi-2) determine immediately before it to the extent that in the case of a constant further change in speed the speed (vx) would reach a value of zero before the interval limit of the displacement path is reached.

## Revendications

1. Procédé de régulation d'un absorbeur d'énergie (8) pouvant être commandé, dans un système de direction pour un véhicule automobile, comprenant les étapes suivantes :
a) détermination d'une grandeur de mouvement d'un mouvement relatif entre une unité de console (2) prévue pour une fixation sur le véhicule automobile de manière fixe avec celui-ci, et une unité de palier d'arbre de direction (3) supportée par l'unité de console (2) et destinée au montage rotatif d'un arbre de direction (4), l'unité de palier d'arbre de direction (3) pouvant coulisser par rapport à l'unité de console (2), le long d'un parcours de coulissement, dans un intervalle limité (Smax),
b) délivrance d'un signal de commande à un absorbeur d'énergie (8) pouvant être commandé, pour régler une force de résistance à l'encontre d'un coulissement de l'unité de palier d'arbre de direction (3) par rapport à l'unité de console (2),
**caractérisé en ce qu'**entre l'étape a) et l'étape b) sont par ailleurs prévues les étapes suivantes :
c) détermination de la grandeur de mouvement au moyen d'un capteur (100) pour déterminer une position (s) de l'unité de palier d'arbre de direction (3) le long du parcours de coulissement
c1) par calcul de la vitesse instantanée (vi) du mouvement relatif de l'unité de palier d'arbre de direction,
d) détermination d'une valeur prédéfinie pour la valeur du signal de commande destiné à être délivré à l'absorbeur d'énergie (8)
d1) sur la base de la position instantanée (si) et de la vitesse instantanée (vi), avec laquelle s'effectue le mouvement relatif instantané.

2. Procédé de régulation d'un absorbeur d'énergie (8) pouvant être commandé, selon la revendication 1, **caractérisé en ce que** l'on modifie la valeur prédéfinie respectivement calculée pour le signal de commande, dans le sens d'une force de résistance plus élevée, lorsque la dernière vitesse (vi) déterminée est supérieure ou égale à la vitesse (vi-1) déterminée immédiatement avant, ou lorsque la dernière vitesse (vi) déterminée est supérieure à une vitesse prédéfinie (vVi) pouvant être respectivement prescrite.

3. Procédé de régulation d'un absorbeur d'énergie (8) pouvant être commandé, selon l'une des revendications précédentes, **caractérisé en ce que** l'on modifie la valeur prédéfinie respectivement calculée pour le signal de commande, dans le sens d'une force de résistance plus faible, lorsque la dernière vitesse (vi) déterminée est plus faible que la vitesse (vi-1) déterminée immédiatement avant d'une valeur telle, que pour une variation ultérieure constante de la vitesse, la vitesse (vx) atteindrait la valeur nulle avant que soit atteinte la limite d'intervalle (se) du parcours de coulissement, ou lorsque la dernière vitesse (vi) déterminée est inférieure à une vitesse prédéfinie (vVi) pouvant être respectivement prescrite.

4. Procédé de régulation d'un absorbeur d'énergie (8) pouvant être commandé, selon la revendication 1, **caractérisé en ce que** l'on modifie la valeur prédéfinie respectivement calculée pour le signal de commande dans le sens d'une force de résistance plus élevée, lorsqu'un groupe de valeurs de vitesse (vi, vi-1) déterminées dernièrement est supérieur ou égal au groupe de valeurs de vitesse (vi-1, vi-2) déterminé immédiatement avant.

5. Procédé de régulation d'un absorbeur d'énergie (8) pouvant être commandé, selon la revendication 4, **caractérisé en ce que** l'on modifie la valeur prédéfinie respectivement calculée pour le signal de commande dans le sens d'une force de résistance plus faible, lorsque le groupe de valeurs de vitesse (vi, vi-1) déterminé dernièrement est inférieur au groupe de valeurs de vitesse (vi-1, vi-2) déterminé immédiatement avant d'une valeur telle, que pour une variation constante ultérieure de la vitesse, la vitesse (vx) atteindrait la valeur nulle avant que soit atteinte la limite d'intervalle du parcours de coulissement.
